Europäisches Patentamt

European Patent Office

Office européen des brevets

(11) Publication number: **0 324 286 B1**

# EUROPEAN PATENT SPECIFICATION

(45) Date of publication of patent specification: **26.08.92**   (51) Int. Cl.5: **C10G 11/18**, B01J 8/28, B01J 38/28

(21) Application number: **88312437.2**

(22) Date of filing: **30.12.88**

(54) Improved high efficiency regenerator apparatus.

(30) Priority: **30.12.87 US 139519**

(43) Date of publication of application:
**19.07.89 Bulletin 89/29**

(45) Publication of the grant of the patent:
**26.08.92 Bulletin 92/35**

(84) Designated Contracting States:
**BE DE FR GB IT NL**

(56) References cited:
**US-A- 4 283 273**

(73) Proprietor: **MOBIL OIL CORPORATION**
**150 East 42nd Street**
**New York New York 10017(US)**

(72) Inventor: **Humble, John Duncan**
**103 Village Mill East**
**Lawrenceville New Jersey 08648(US)**
Inventor: **Ruggles, John David**
**7 Rozeldene Grayshott**
**Hindhead, Surrey GU26 6TW(GB)**
Inventor: **Jacobowitz, Judah Leon**
**6 Cleveland Lane, Rd. 4**
**Princeton New Jersey 08540(US)**
Inventor: **Searles, Raymond Charles**
**5 Norton Drive**
**Flemington New Jersey 08822(US)**

(74) Representative: **Colmer, Stephen Gary**
**Patent Department c/o Mobil Services Company Limited Mobil Court 3 Clements Inn**
**London WC2A 2EB(GB)**

Rank Xerox (UK) Business Services

EP 0 324 286 B1

## Description

IMPROVED HIGH EFFICIENCY REGENERATOR APPARATUS

The present invention provides a regenerator for regenerating catalyst used in the fluidic catalytic cracking of hydrocarbons. More particularly, the invention is directed to an improved construction for a high efficiency regenerator which minimizes problems of material damage due to thermal stress.

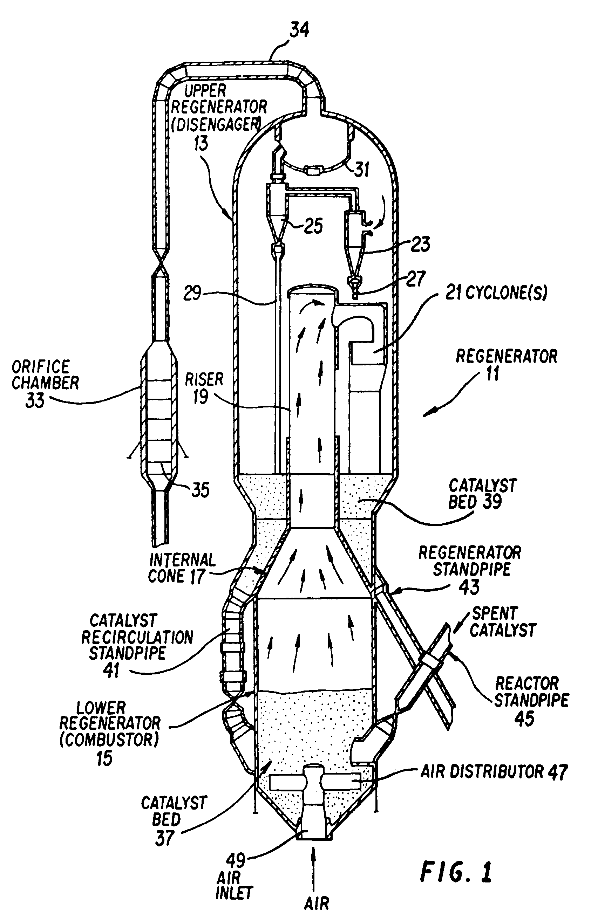

A conventional high efficiency catalyst regenerator is illustrated in Fig. 1. The regenerator 11 is divided into an upper regenerator section 13, commonly known as a disengager section and a lower regenerator section 15, commonly known as a combustor section. Spent catalyst, received typically from a fluidized catalytic cracking (FCC) apparatus, is introduced into the lower regenerator section 15 through a reactor standpipe 45. The catalyst contained within the lower regenerator section 15 is illustrated as a catalyst bed 37. The catalyst received through the reactor standpipe 45 is at a high temperature, typically at 538°C (1,000°F). An air inlet 49 is used to introduce air into the catalyst bed, with the air entering at a temperature within the range of 204 to 260°C (400° to 500°F). The introduced air passes through an air distributor 47 having a plurality of holes therein and into the catalyst bed 37. The mixing of the air and catalyst causes a combustion of carbonaceous material deposited on the catalyst particles, thus regenerating them. The mixture of air and catalyst particles is typically at a temperature of 732 to 760°C (1350 to 1400°F). The heated air entering at inlet 49 also forms a fluidized mixture of air and catalyst above the catalyst bed 37 which passes upwardly through an internal cone 17 and into a riser 19. The riser 19 is provided in the upper (disengager) regenerator section 13 and allows a more complete combustion of the carbonaceous material on the catalyst. The mixture of air and catalyst exiting riser 19 enters a serial connection of cyclones 21 wherein the catalyst particles are separated from the air and deposited in a catalyst bed 39 located at the bottom of the upper disengager regenerator section 13.

In addition, the atmosphere of the upper regenerator section 13, which also contains a mixture of air and catalyst particles, passes through the inlet of a cyclone 23 which is in turn connected in series to a cyclone 25 for further separation of catalyst particles. The respective diplegs 27 and 29 from the cyclones 23 and 25 are embedded within the catalyst bed 39. Exhausted gas from the cyclones 21 are conducted into a plenum 31 at the top of the upper regenerator section 13 and from there into a conduit 34 and through orifice chamber 33 containing a plurality of spaced perforated plates 35 therein. The orifice chamber 33 serves as a pressure dropping device and the output thereof goes to a boiler or conventional flue gas stack.

Catalyst from the catalyst bed 39 is supplied through a regenerator standpipe 43 to the bottom of an FCC reactor where it is admixed with fluidized hydrocarbons and passed through a riser of an FCC cracking unit. In addition, a portion of the catalyst from catalyst bed 39 passes through a catalyst recirculation standpipe 41 and into catalyst bed 37 of the lower regenerator section 15.

The lower regenerator section 15 is considered a combustor since most of the combustion which removes the carbonaceous deposits from the catalyst occurs within this section of the regenerator. The upper regenerator section 13 is called the disengager because it serves primarily to separate the regenerated catalyst from the airstream in which it is entrained.

While the regenerator structure depicted in Fig. 1 serves to regenerate catalyst particles with great efficiency, it has been discovered that the internal cone 17 tends to prematurely fail by buckling, cracking and/or sagging under normal use conditions.

EP-A-0142275 and US-A-4283273 disclose conventional regenerators for fluidizable catalyst particles. No provisions are made for relieving the stresses which may cause premature failure in these regenerators.

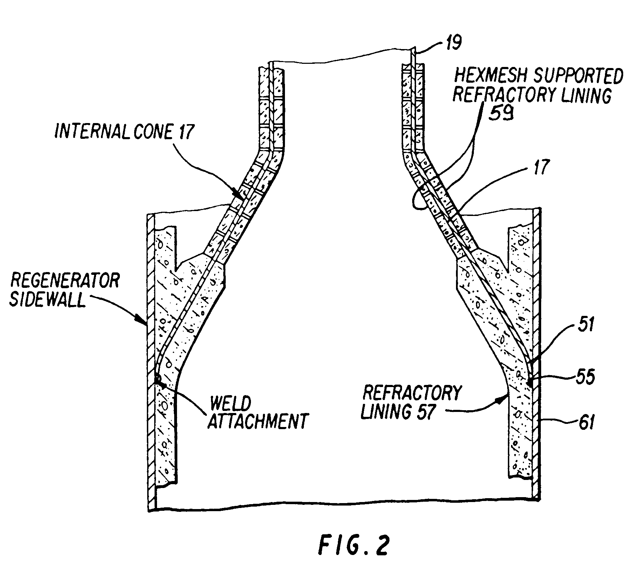

The problem of severe overstressing of the internal cone has been observed within a period as short as one or two years following an initial startup of a new regenerator unit. Cone damage requires expensive repairs and removal of the regenerator and its associated FCC cracking unit from use for repair. The premature failure of cone 17 is believed to be caused by thermal stress at the connection between the internal cone 17 and the sidewalls of the lower regenerator section 15. This connection is more clearly illustrated in Fig. 2 which shows an enlarged view of a portion of Fig. 1. As illustrated in Fig. 2, the riser 19 includes a downwardly extending sidewall 51 which is a continuation of the internal cone 17. The sidewall 51 is attached, usually by welding, at area 55 to the sidewall 61 of the lower regenerator section 15. As also shown in Fig. 2, the inside surfaces of the reactor and cone 17 are covered with a refractory lining 57. The lower portion of riser and upper portion of cone 17 are also covered on their inside and outside surfaces with a hexmesh supported refractory lining 59.

Despite the presence of the refractory lining 57, considerable stress at the connection between internal cone 17 and the reactor sidewall 61 is caused by differential thermal expansion between the hot internal cone 17 and cooler regenerator sidewall 61, causing, in turn, cone damage. In addition, failure of the internal cone may be attributed to reduce strength of the internal cone 17 at process temperatures, and the high bending and buckling stresses in the internal cone encountered during normal and upset operations.

In accordance with the invention, there is provided a catalyst regenerator apparatus as defined in claim 1.

The advantages and structural features of the invention will be more clearly understood from the following detailed description of the invention which is provided in connection with the accompanying drawings.

In the drawings, Fig. 1 illustrates in cutaway view a conventional high efficiency catalyst regenerator;

Fig. 2 illustrates in greater detail a side sectional view of a portion of the regenerator illustrated in Fig. 1;

Fig. 3 illustrates in side-sectional view a portion of the regenerator of Fig. 1 containing the first embodiment of the invention; and

Fig. 4 illustrates in side-cutaway view a regenerator employing the second embodiment of the invention.

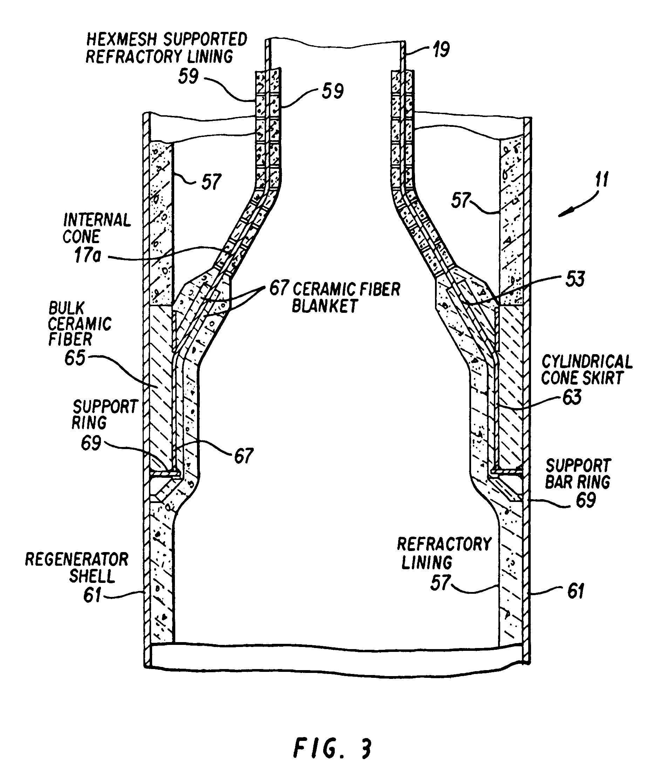

The invention will first be described in connection with a first embodiment thereof illustrated in Fig. 3. As shown therein, an internal cone 17a of regenerator 11 is provided with a cylindrical downwardly extending skirt 63. Internal cone 17a is mounted within regenerator 11 so that the cylindrical skirt 63 is spaced from the sidewall 61 of the reactor vessel by about 50 to 203 mm (2" to 8"). A support bar ring 69 is fastened to the internal periphery of the sidewall 61 and the cylindrical cone skirt 63 is fastened to the support ring 69. Fastening of the bar ring 69 to wall 61 of regenerator vessel, and of the cylindrical skirt 63 to the bar ring 69 may be accomplished by any suitable fastening arrangement, for example, by welding. The space provided between the cylindrical cone skirt 63 and sidewall 61 of the regenerator vessel is preferably filled with a commercially available bulk ceramic fiber layer 65 or the space may be left void of any fill. The bulk ceramic fiber layer 65 or the void space serves to insulate the cylindrical skirt 63 and conical portion 53 of the internal cone from the reactor vessel sidewall 61 and also permits a certain amount of flexure of the cylindrical skirt 63 and associated conical portion 53.

A commercially available ceramic fiber blanket 67 is also preferably provided on both the upper and lower surfaces of the conical portion 53. The fiber ceramic blanket provided on the under surface extends from a point along the lower portion of the conical portion 53 down along the inside periphery of the cylindrical cone skirt 63. The ceramic fiber blanket 67 provided on the upper surface of conical portion 53 extends along conical portion 53, terminating at the bulk ceramic fiber layer 65 or void space. The void space, or ceramic fiber blanket 65, if used, also provides the cylindrical skirt 63 and the lower end of conical portion 53 with a certain amount of room for flexure.

A refractory lining 57 is also provided on the interior periphery of the regenerator vessel sidewall 61 and over the ceramic fiber blanket 67, both on the inner surface of the cylindrical cone skirt 63 and cone portion 53 and may also be on the outer surface of cone portion 53. In addition, a hexmesh supported refractory lining 59 is provided along the inner and outer peripheral surfaces of the upper portion of cone portion 53 and a lower portion of the riser 19.

With the construction illustrated in Fig. 3, thermal stress caused by the interface of the hot internal cone 17a with the cooler regenerator shell 61 is considerably reduced. Moreover, the ceramic fiber blanket 67 provides a certain degree of flexibility for the internal cone 17a. The bulk ceramic fiber in the space between the cylindrical cone skirt 63 and the regenerator sidewall 61, or the void space, whichever is used further reduces stress and allows for differential expansion between the internal cone 17a and regenerator vessel sidewall 61. If the bulk ceramic fiber 65 is used for insulation, it also reduces heat flow to the regenerator sidewall 61 and serves to minimize the intrusion of FCC catalyst from catalyst bed 39 into the space between the cylindrical skirt 63 and regenerator sidewall 61. A void space instead in this location may be used to increase heat transfer between cone skirt 63 and sidewall 61 thereby reducing temperature differential and consequent stress.

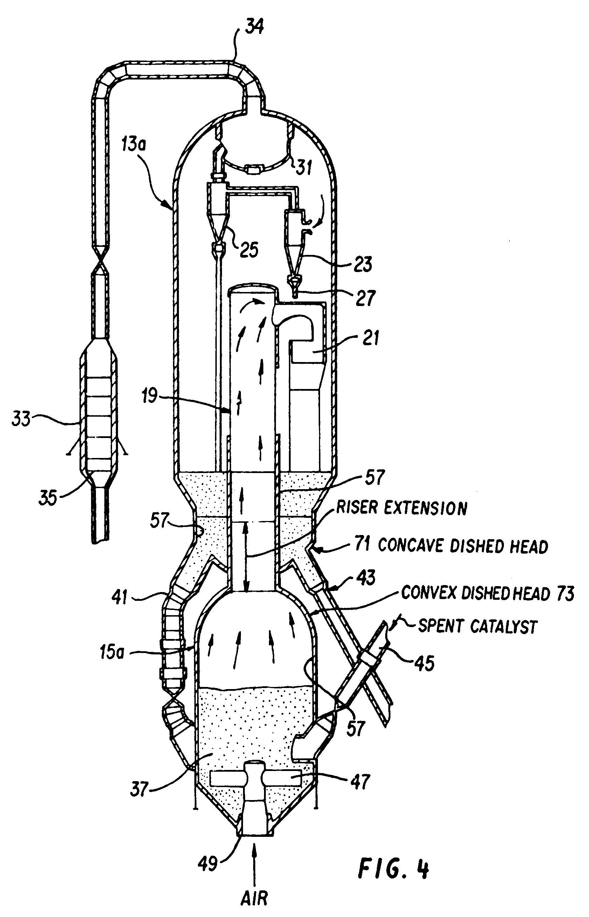

Another embodiment of the invention is illustrated in Fig. 4. In this embodiment the regenerator vessel is separated into two separate vessels, an upper regenerator vessel 13a and a lower regenerator vessel 15a. The lower regenerator vessel 15a has at a top portion thereof a convex dish head 73 which has a central aperture which is connected to a downward extension of the riser 19. The bottom of the upper regenerator vessel 13 contains a concave dish head 71 through which the extension of the riser 19 passes. The aperture in the concave dish head 71 and that in the convex dish head 73 are essentially in axial alignment and are further axially aligned with respect to the axis of the riser 19. The inner surfaces of the lower regenerator vessel 15a are coated with a refractory lining 57 which extends up the entire length of the riser 19. The refractory lining 57 is also provided on the outer peripheral surface of the riser 19 to a point above a nominal level of catalyst bed 39 and on the inner peripheral surface of the upper regenerator vessel 13a, at the bottom thereof, including the concave dish head 71.

The remaining structures of Fig. 4 are the same as depicted in Fig. 1 and accordingly a detailed description thereof is omitted herein.

During operation of the high efficiency regenerator in accordance with the invention, the operating performance is substantially the same as with the conventional high efficiency regenerator illustrated in Fig. 1. However, the problems due to thermal stress which cause bending buckling, cracking and/or sagging of the internal cone 17 are eliminated.

While preferred embodiments of the invention have been described and illustrated, it should be apparent that many modifications can be made to the invention and accordingly, that the invention is not limited by the foregoing description, but is only limited by the scope of the appended claims.

## Claims

1. A catalyst regenerator apparatus comprising:

    a regenerator vessel having a sidewall;

    a first combustor section within the regenerator vessel for regenerating spent catalyst, the combustor section comprising a catalyst receiving portion and means for introducing a combustor gas into catalyst introduced into the receving portion;

    a second disengaging section within the regenerator vessel for receiving a mixture comprising catalyst particles and the combusting gas from the first section, the second section including at least one separation device for separating regenerated catalyst particles from the mixture; and

    means within the regenerator vessel for physically separating the first combustor section from the second disengaging section, the separating means defining a conduit providing a flow passage for the mixture from the first to the second section, the conduit having, at one end, a riser extending into the second section, and at another end a sidewall, and;

    means for supporting the separating means such that the sidewall of the conduit is spaced from the sidewall of the regenerator vessel.

2. A catalyst regenerator as in Claim 1, wherein the sidewall of the separating means includes a cylindrical skirt extending downwardly from the internal cone and the regenerator vessel has a cylindrical sidewall, the space being defined at least between the cylindrical skirt and the cylindrical sidewall.

3. A catalyst regenerator as in Claim 1, further comprising an insulating material provided in the space.

4. A catalyst regenerator as in Claim 1, wherein the space is an unfilled void space.

5. A catalyst regenerator as in Claim 2, wherein the support means comprises a bar ring attached to the inner periphery of the sidewall of the regenerator vessel and the cylindrical skirt is supported by the bar ring.

6. A catalyst regenerator as in Claim 1, further comprising a refractory material covering at least a portion of an inner periphery of the conduit sidewall which is disposed closest to the second regenerator section.

7. A catalyst regenerator as in Claim 6, further comprising a ceramic fiber material located between the inner periphery of the conduit and the refractory material.

8. A catalyst regenerator as in Claim 7, wherein the refractory material also covers at least a portion of an outer periphery of the conduit sidewall.

9. A catalyst regenerator as in Claim 8, further comprising a ceramic fiber material located between an outer periphery of the conduit and the refractory material.

10. A catalyst regenerator as in Claim 6 wherein the refractory material extends from the inner periphery of the conduit to cover an inner periphery of the regenerator vessel within the combustion section.

11. A catalyst regenerator as in Claim 1, wherein the conduit includes a first larger diameter cylindrical portion, a second smaller diameter cylindrical portion, forming the riser, and a frusto conical shaped intermediate portion interconnecting the larger and smaller diameter cylindrical portions.

## Patentansprüche

1. Regenerator-Vorrichtung für einen Katalysator, welche umfaßt:

    ein Regeneratorgefäß mit einer Seitenwand;

    einen ersten Combustorabschnitt innerhalb des Regeneratorgefäßes zum Regenerieren des verbrauchten Katalysators, wobei dieser Combustorabschnitt einen Katalysatoraufnahmeteil und eine Einrichtung zur Einführung eines Combustorgases in den Katalysator umfaßt, der in den Aufnahmeteil eingeführt wird;

einen zweiten Auslöseabschnitt innerhalb des Regeneratorgefäßes zur Aufnahme der Mischung, die Katalysatorpartikel und das Verbrennungsgas aus dem ersten Abschnitt umfaßt, wobei dieser zweite Abschnitt zumindest eine Trennungseinrichtung zum Abtrennen der regenerierten Katalysatorpartikel aus der Mischung umfaßt; und

eine Einrichtung innerhalb des Regeneratorgefäßes zur physikalischen Abtrennung des ersten Combustorabschnittes vom zweiten Auslöseabschnitt, wobei diese Abtrennungseinrichtung eine Leitung darstellt, die einen Strömungsweg für die Mischung vom ersten zum zweiten Abschnitt bildet, wobei diese Leitung an einem Ende einen Riser, der sich in den zweiten Abschnitt erstreckt, und am anderen Ende eine Seitenwand aufweist, und;

eine Einrichtung zum Stützen der Abtrennungeinrichtung, so daß die Seitenwand der Leitung von der Seitenwand des Regeneratorgefäßes räumlich getrennt ist.

2. Katalysatorregenerator nach Anspruch 1, worin die Seitenwand der Abtrennungeinrichtung einen zylindrischen Rand umfaßt, der sich vom Innenkonus nach unten erstreckt, und das Regeneratorgefäß eine zylindrische Seitenwand aufweist, wobei der Abstand zumindest zwischen dem zylindrischen Rand und der zylindrischen Seitenwand definiert wird.

3. Katalysatorregenerator nach Anspruch 1, der außerdem ein Isolationsmaterial umfaßt, das in diesem Raum vorgesehen ist.

4. Katalysatorregenerator nach Anspruch 1, worin der Raum ein ungefüllter Hohlraum ist.

5. Katalysatorregenerator nach Anspruch 2, worin die Stützeinrichtung einen Sperring umfaßt, der an den inneren Umfang der Seitenwand des Regeneratorgefäßes angebracht ist, und der zylindrische Rand durch diesen Sperring gehalten wird.

6. Katalysatorregenerator nach Anspruch 1, der außerdem ein feuerfestes Material umfaßt, das zumindest den Abschnitt des inneren Umfangs der Seitenwand der Leitung bedeckt, der am nächsten zum zweiten Regeneratorabschnitt angeordnet ist.

7. Katalysatorregenerator nach Anspruch 6, der außerdem ein Keramikfasermaterial umfaßt, das zwischen dem inneren Umfang der Leitung und dem feuerfesten Material angeordnet ist.

8. Katalysatorregenerator nach Anspruch 7, worin das feuerfeste Material auch mindestens einen Abschnitt des äußeren Umfangs der Seitenwand der Leitung bedeckt.

9. Katalysatorregenerator nach Anspruch 8, der außerdem ein Keramikfasermaterial umfaßt, das zwischen dem Außenumfang der Leitung und dem feuerfesten Material angeordnet ist.

10. Katalysatorregenerator nach Anspruch 6, worin sich das feuerfeste Material vom Innenumfang der Leitung erstreckt, um den Innenumfang des Regeneratorgefäßes innerhalb des Verbrennungsabschnittes zu bedecken.

11. Katalysatorregenerator nach Anspruch 1, worin die Leitung einen ersten zylindrischen Abschnitt mit größerem Durchmesser, einen zweiten zylindrischen Abschnitt mit geringerem Durchmesser, der den Riser bildet, und einen nicht vollkommen konisch geformten mittleren Abschnitt aufweist, der die zylindrischen Abschnitte mit größerem und geringerem Durchmesser miteinander verbindet.

**Revendications**

1. Un appareil régénérateur de catalyseur comprenant:
   - une cuve de régénérateur présentant une paroi latérale;
   - une première section de combustion intérieure à cuve de régénérateur pour régénérer le catalyseur usé, la section de combustion comportant une partie de réception du catalyseur et des moyens d'introduction d'un gaz de combustion dans le catalyseur introduit dans la partie de réception;
   - une deuxième section de séparation intérieure à cuve de régénérateur pour recevoir un mélange comprenant des particules de catalyseur et du gaz de combustion provenant de la première section, la deuxième section comprenant au moins un dispositif de séparation pour séparer du mélange les particules de catalyseur régénéré; et
   - des moyens intérieurs à la cuve de régénérateur pour séparer physiquement la première section de combustion de la deuxième section de séparation, les moyens de séparation définissant un conduit fournissant un courant de passage pour le mélange de la première vers la deuxième section, le conduit ayant, à une extrémité, une colonne ascendante s'étendant dans la deuxième section, et à l'autre extrémité une paroi latérale; et

- des moyens de support, pour les moyens de séparation, de telle sorte que la paroi latérale du conduit soit espacée de la paroi latérale de la cuve de régénérateur.

2. Un régénérateur de catalyseur selon la revendication 1, dans lequel la paroi latérale des moyens de séparation comporte une chemise cylindrique s'étendant vers le bas depuis le cône interne et la cuve de régénérateur à une paroi latérale cylindrique, l'espace étant défini au moins entre la chemise cylindrique et la paroi latérale cylindrique.

3. Un régénérateur de catalyseur selon la revendication 1, comprenant en outre un matériau d'isolation disposé dans l'espace.

4. Un régénérateur de catalyseur selon la revendication 1, dans lequel l'espace est vide, non remplie.

5. Un régénérateur de catalyseur selon la revendication 2, dans lequel le moyen de support comprend un anneau de retenue fixé à la périphérie intérieure de la paroi latérale de la cuve du régénérateur et la chemise cylindrique est supportée par l'anneau de retenue.

6. Un régénérateur de catalyseur selon la revendication 1, comprenant en outre un matériau réfractaire couvrant au moins une partie d'une périphérie intérieure de la paroi latérale du conduit qui est disposée le plus près de la deuxième section du régénérateur.

7. Un régénérateur de catalyseur selon la revendication 6, comprenant en outre un matériau de fibres céramiques disposé entre la périphérie interne du conduit et le matériau réfractaire.

8. Un régénérateur de catalyseur selon la revendication 7, dans lequel le matériau réfractaire couvre également au moins une partie d'une périphérie externe de la paroi latérale du conduit.

9. Un régénérateur de catalyseur selon la revendication 8, comprenant en outre un matériau de fibres céramiques situé entre une périphérie extérieure du conduit et le matériau réfractaire.

10. Un régénérateur de catalyseur selon la revendication 6, dans lequel le matériau réfractaire s'étend depuis la périphérie intérieure du conduit pour couvrir une périphérie intérieure de la cuve de régénérateur située dans la section de combustion.

11. Un régénérateur de catalyseur selon la revendication 1, dans lequel le conduit comporte une première partie cylindrique de plus grand diamètre, une deuxième partie cylindrique de plus petit diamètre, formant la colonne ascendante, et une partie intermédiaire de forme tronconique interconnectant les parties cylindriques de plus grand diamètre et plus petit diamètre.

FIG. 1

INTERNAL CONE 17

HEXMESH SUPPORTED
REFRACTORY LINING
59

17

REGENERATOR
SIDEWALL

WELD
ATTACHMENT

REFRACTORY
LINING 57

51

55

61

FIG. 2

**FIG. 3**

EP 0 324 286 B1

FIG. 4

57 RISER EXTENSION
71 CONCAVE DISHED HEAD
CONVEX DISHED HEAD 73
SPENT CATALYST
AIR

10